# EUROPEAN PATENT APPLICATION

(11) **EP 0 632 297 A1**
(43) Date of publication of application: **04.01.1995**
(21) Application number: 94304831.4
(22) Date of filing: 01.07.1994
(51) Int. Cl.: G02B 5/18, G02B 27/00

(54) **Phase control in a binary diffractive optical element by spatial displacement**

(30) Priority: 02.07.1993 US 85360
(71) Applicant: XEROX CORPORATION, Rochester New York 14644 (US)
(72) Inventor: Harris, Ellis D., Claremont, CA 91711 (US)
(74) Representative: Reynolds, Julian David

(57) **Abstract**

Multilevel surface relief phase grating structures (14, 16) of a binary diffractive optical element (10) are spacially offset from each other along the surface of the binary diffractive optical element (10) to induce a shift in phase from the light beams (22, 24) diffracted by the grating structures (14, 16). An offset of one half the period will cause a Π shift in the phase between beams (22, 24) diffracted by two multilevel surface relief phase grating structures (14, 16).

## Description

This invention relates to a binary diffractive optical element, and, more particularly, to phase control by a binary diffractive optical element by spatial displacement of the structure of the binary diffractive optical element along its surface.

The propagation of a light beam can be changed by three basic means: reflection by a mirror, refraction by a lens and diffraction by a grating. Optical systems traditionally rely on reflection and refraction to achieve the desired optical transformation. Optical design, based on mirror and lens elements, is a well-established and refined process. Until recently, the problems with diffraction and fabricating high efficiency diffractive elements have made diffractive elements unfeasible components of optical systems.

The diffractive process does not simply redirect a light beam. Diffraction, unlike refraction and reflection, splits a light beam into many beams -- each of which is redirected at a different angle or order. The percentage of the incident light redirected by the desired angle into some given diffraction order is referred to as the diffraction efficiency for that order. The diffraction efficiency of a diffractive element is determined by the element's surface profile. If the light that is not redirected by the desired angle is substantial, the result will be an intolerable amount of scatter in the image or output plane of the optical system.

Theoretically, on-axis diffractive phase elements consisting of a grating having a given period can achieve 100 percent diffraction efficiency. To achieve this efficiency, however, a continuous phase profile within any given period is necessary. The theoretical diffraction efficiency of this surface profile is also relatively sensitive to a change in wavelength. By contrast, refractive elements are relatively wavelength insensitive. The technology for producing high quality, high efficiency, continuous phase profiles of the diffraction does not presently exist.

A compromise that results in a relatively high diffraction efficiency and ease of fabrication is a multi-level phase grating. The larger the number of discrete phase levels, the better the approximation of the continuous phase function. These multi-level phase profiles can be fabricated using standard semiconductor integrated circuit fabrication techniques.

As disclosed in *Binary Optics Technology*:*The Theory and Design of Multi-level Diffractive Optical Elements* by G.J. Swanson of the Lincoln Laboratory at the Massachusetts Institute of Technology, (Technical Report 854, 14 August 1989) and the resulting US-A4,895,790, a fabrication process starts with a mathematical phase description of a diffractive phase profile and results in a fabricated multi-level diffractive surface. The first step is to take the mathematical phase expression and generate from it a set of masks that contain the phase profile information. The second step is to transfer the phase profile information from the masks into the surface of the element specified by the lens design.

The first step involved in fabricating the multi-level element is to mathematically describe the ideal diffractive phase profile that is to be approximated in a multi-level fashion. The next step in the fabrication process is to create a set of lithographic masks which are produced by standard pattern generators used in the integrated circuit industry.

A substrate of the desired material, such as Ge, ZnSe, Si, and SiO₂, is coated with a thin layer of photoresist. A first lithographic mask is then placed in intimate contact with the substrate and illuminated from above with an ultraviolet exposure lamp. Alternately, pattern generators, either optical or electron beam, can expose the thin layer of photoresist. The photoresist is developed, washing away the exposed resist and leaving the binary grating pattern in the remaining photoresist. This photoresist will act as an etch stop.

The most reliable and accurate way to etch many optical materials is to use reactive ion etching. The process of reactive ion etching anisotropically etches material at very repeatable rates. The desired etch depth can be obtained very accurately. The anisotropic nature of the process assures a vertical etch, resulting in a true binary surface relief profile. Once the substrate has been reactively ion etched to the desired depth, the remaining photoresist is stripped away, leaving a binary surface relief phase grating.

The process may be repeated using a second lithographic mask having half the period of the first mask. The binary phase element is recoated with photoresist and exposed using the second lithographic mask which has half the period of the first mask. After developing and washing away the exposed photoresist, the substrate is reactively ion etched to a depth half that of the first etch. Removal of the remaining photoresist results in a 4 level approximation to the desired profile. The process may be repeated a third and fourth time with lithographic masks having periods of one-quarter and one-eighth that of the first mask, and etching the substrates to depths of one-quarter and one-eighth that of the first etch. The successive etches result in elements having 8 and 16 phase levels. More masks than four might be used, however, fabrication errors tend to predominate as more masks are used.

This process is repeated to produce a multilevel surface relief phase grating structure in the substrate. The result is a discrete, computer-generated structure approximating the original idealized diffractive surface. For each additional mask used in the fabrication process, the number of discrete phase levels is doubled, hence the name "binary" optical element or, more precisely, a binary diffractive optical element.

After only four processing iterations, a 16 phase level approximation to the continuous case can be obtained. The process can be carried out in parallel, producing many elements simultaneously, in a cost-effective manner.

A 16 phase level structure achieves 99 percent diffraction efficiency. The residual 1 percent of the light is diffracted into higher orders and manifests itself as scatter. In many optical systems, this is a tolerable amount of scatter. The fabrication of the 16 phase level structure is relatively efficient due to the fact that only four processing iterations are required to produce the element.

After the first etching step, the second and subsequent lithographic masks have to be accurately aligned to the existing pattern on the substrate. Alignment is accomplished using another tool standard to the integrated circuit industry, a mask aligner.

As noted, the photoresist on the substrate can be exposed with an electron-beam pattern generator. The e-beam direct-write process eliminates masks and their corresponding alignment and exposure problems. Binary optics have also been reproduced using epoxy casting, solgel casting, embossing, injection molding and holographic reproduction.

Binary optical elements have a number of advantages over conventional optics. Because they are computer-generated, these elements can perform more generalized wavefront shaping than conventional lenses or mirrors. Elements need only be mathematically defined: no reference surface is necessary. Therefore, wildly asymmetric binary optics are able to correct aberrations in complex optical systems, and elements can be made wavelength-sensitive for special laser systems.

The diffractive optical elements are generally thinner, lighter and can correct for many types of aberrations and distortions. It is possible to approximate a continuous phase profile with a stepwise profile of discrete phase levels.

A phase shifting optical device will transmit all of an incident light beam but introduce a phase delay or phase shift to a certain percentage of the incident light.

A phase shifting optical element is desired that is both easy and inexpensive to fabricate, easy to use and can function over a wide range of intensity beams.

It is an object of this invention to provide a phase shifting optical element, and a binary diffractive optical element to function as phase control by spatial displacement.

In accordance with the present invention, there is provided a binary diffractive optical element for phase controlling an incident light beam comprising an optical substrate, and at least a first multilevel surface relief phase grating structure and a second multilevel surface relief phase grating structure upon said optical substrate wherein said second multilevel surface relief phase grating structure is spatially offset from said first multilevel surface relief phase grating structure along the surface of said binary diffractive optical element such that a light beam diffracted from said second multilevel surface relief phase grating structure from said incident light beam is shifted in phase from a light beam diffracted from said first multilevel surface relief phase grating structure from said incident light beam.

Multilevel surface relief phase grating structures of a binary diffractive optical element are spatially offset from each other along the surface of the binary diffractive optical element to induce a shift in phase from light beams diffracted by the grating structures. An offset of one-half the period will cause a Π shift in the phase between beams diffracted by two multilevel surface relief phase grating structures. An offset of one-quarter the period will cause a Π / 2 shift in the phase between beams diffracted by two multilevel surface relief phase grating structures.

Other objects and attainments together with a fuller understanding of the invention will become apparent and appreciated by referring to the following description and claims taken in conjunction with the accompanying drawings, in which:
Figure 1 is a schematic illustration of the cross-section side view of the phase controlling binary diffractive optical element formed according to the present invention;
Figure 2 is a schematic illustration of the masking steps for fabricating the phase controlling binary diffractive optical element of Figure 1; and
Figure 3 is a schematic illustration of the top view of a binary diffractive optical element for multiple phase control formed according to the present invention.

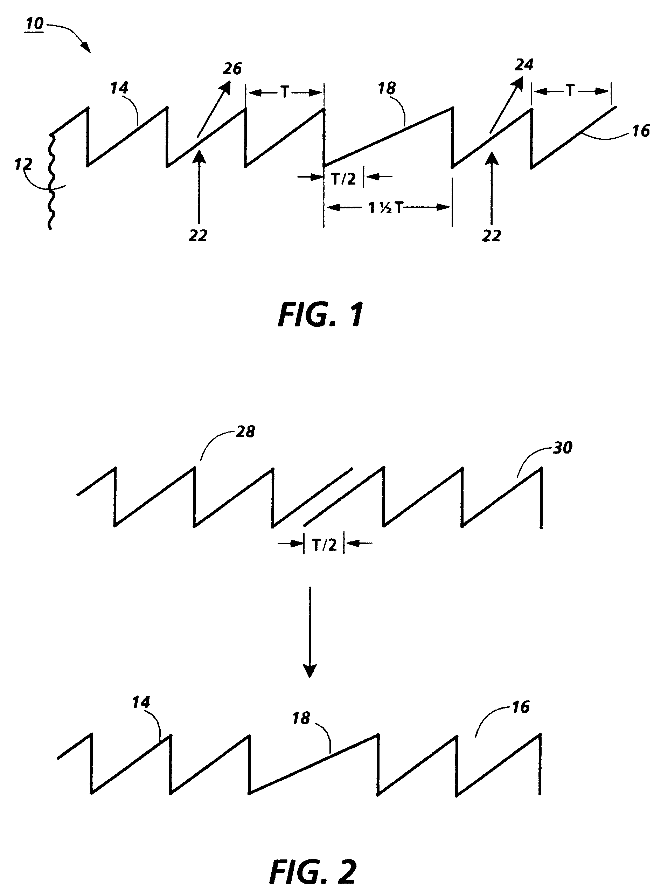

Reference is now made to Figure 1, wherein there is illustrated a phase controlling binary diffractive optical element 10. The binary diffractive optical element has an optical substrate 12 of SiO₂ upon which is a first multilevel surface relief phase grating structure 14 and a second multilevel surface relief phase grating structure 16. The first multilevel phase surface relief phase structure 14 and the second multilevel surface relief phase grating structure 16 are identical and form identical pluralities of blazed gratings. Each of the blazed gratings of both the first and second multilevel surface relief phase grating structures have a period T. These two grating structures might typically produce the same diffraction of a light beam.

A phase transition region 18 is disposed in the structure of the optical substrate 12 between the first multilevel surface relief phase grating structure 14 and the second multilevel surface relief phase grating structure 16. The phase transition region 18 has a width of one and a half the period T of the grating structures 14 and 16 so that the spatial shift 20 between the first multilevel surface relief phase grating structure 14 and the second multilevel surface relief phase grating structure 16 is T / 2 or one-half the period.

By the shifting theorem in Fourier Transform theory, a shift in the spatial domain results in a phase shift in the far field of angular domain. Thus, in any binary diffractive optical element the optical phase of the diffracting light exiting the grating structure will be shifted as a result of the spatial shift of the grating structure which constitutes the binary diffractive optical element. Ray bending or diffraction of the light and the diffraction efficiency will remain unchanged from a binary diffractive optical element without a phase transition region.

In many applications the optical intensity at the phase transition region 18 will be zero. The phase transition will thus cause a minimum of disruption.

The offset 20 of one-half the period between the two multilevel phase relief grating structures causes a Π shift in the phase between beams diffracted by the two multilevel phase relief grating structures. Thus, light beam 22 which passes through the optical substrate 12 is incident upon the binary diffractive optical element 10 formed on the surface of the substrate. The second multilevel surface relief phase grating structure 16 will form a diffracted light beam 24. The first multilevel surface relief phase grating structures 14 will form a diffracted light beam 26.

Both diffracted light beams are diffracted from the same incident beam 22. Both diffracted light beams 24 and 26 are diffracted at the same angle since the period and the grating structures 14 and 16 are the same. However, diffracted light beam 24 which is diffracted by the second multilevel surface relief phase grating structure 16 will be phase shifted by Π from diffracted light beam 26 which is diffracted by the first multilevel phase surface relief phase structure 14 due to the offset 22.

The amplitude of the diffracted beam 24 from the offset second multilevel surface relief phase grating structure is out of phase from the non-offset diffracted beam 26. In terms of its complex amplitude, the value of the diffracted beam 24 is "negative" in comparison to the diffracted beam 26 which has a "positive" amplitude, since their phases differ by Π.

The phase controlling binary diffractive optical element 10 with its spatial displacement between the multilevel phase relief grating structures is particularly useful in generating an approximate sin (x) / x function to achieve a near square profile of a spot of light at the focus. Such a spot would help isolate spot size variations from light source amplitude fluctuations.

The phase transition region can be formed without an additional etch step and without an additional mask during the fabrication of the binary diffractive optical element. As shown in Figure 2, the masks 28 forming the first multilevel surface relief phase grating structure and the masks 30 forming the second multilevel surface relief phase grating structure can overlap 32 for one-half the period T to form the first multilevel surface relief phase grating structure 14 and the second multilevel surface relief phase grating structure 16 with the overlapping masks forming the phase transition region 18 with its width of one and a half T.

A second multilevel surface relief phase grating structure spatially offset by a distance of one-quarter the period from the first multilevel surface relief phase grating structure will cause cause a Π / 2 phase shift between beams diffracted by the two multilevel surface relief phase grating structures.

The general rule is for a m Π phase shift between beams diffracted by two multilevel surface relief phase grating structures, where m is any whole number or fraction of a whole number, the two multilevel surface relief phase grating structures should be spatially offset along the surface of the binary diffractive optical element by a distance of m (T/2) where T is the period of the grating structures.

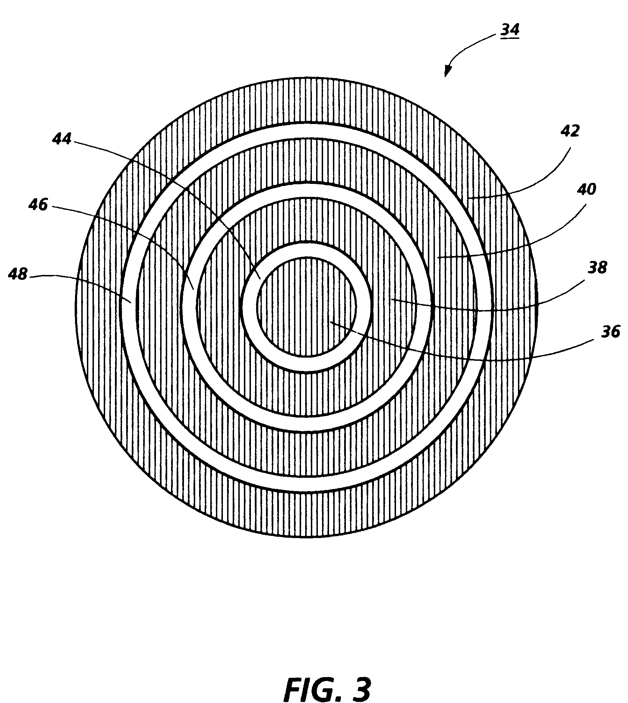

As shown in Figure 3, the binary diffractive optical element 34 can have a plurality of multilevel surface relief phase grating structures 36, 38, 40 and 42 with a plurality minus one of intervening phase transition regions 44, 46 and 48. The phase of a diffracted beam (not shown) from the binary diffractive optical element 34 can be shifted for the entire spatial profile of the beam.

The first and second multilevel surface relief phase grating structures are merely illustrative examples. A plurality of multilevel surface relief phase grating structures, each with different offsets can be fabricated to phase shift different portions of the beam diffracted by the binary diffractive optical element. The plurality of multilevel surface relief phase grating structures of a binary diffractive optical element need not be concentric, nor symmetric. The plurality of multilevel surface relief phase grating structures of a binary diffractive optical element can alter the phase of an incident light beam across the entire spatial profile of the light beam.

The optical substrate 12 can also be formed of materials such as Ge, ZnSe, Si, GaAs, and SiO₂.

## Claims

1. A binary diffractive optical element for phase controlling an incident light beam comprising
an optical substrate, and
at least a first multilevel surface relief phase grating structure and a second multilevel surface relief phase grating structure upon said optical substrate wherein said second multilevel surface relief phase grating structure is spatially offset from said first multilevel surface relief phase grating structure along the surface of said binary diffractive optical element such that a light beam diffracted from said second multilevel surface relief phase grating structure from said incident light beam is shifted in phase from a light beam diffracted from said first multilevel surface relief phase grating structure from said incident light beam.

2. The optical element of claim 1 wherein the offset between said second multilevel surface relief phase grating structure and said first multilevel surface relief phase diffractive grating is equal to one-half the period of said first and second multilevel surface relief phase grating structures.

3. The optical element of claim 1 wherein the offset between said second multilevel surface relief phase grating structure and said first multilevel surface relief phase diffractive grating is equal to one-quarter the period of said first and second multilevel surface relief phase grating structures.

4. The optical element of claim 1 wherein the offset between said second multilevel surface relief phase grating structure and said first multilevel surface relief phase diffractive grating is equal to m times one-half the period of said first and second multilevel surface relief phase grating structures where m is the phase shift in terms of Π.
